# EUROPEAN PATENT SPECIFICATION

(11) **EP 2 033 894 B1**
(45) Date of publication and mention of the grant of the patent: **27.07.2011**
(21) Application number: 07115703.6
(22) Date of filing: 05.09.2007
(51) Int. Cl.: B65B 11/04, A01F 15/07

(54) **Wrapping machine**
Umwicklungsmaschine
Machine d'emballage

(43) Date of publication of application: 11.03.2009
(73) Proprietor: Deere & Company, Moline, IL 61265-8098 (US)
(72) Inventor: Roussel, David, 70190 Grandvelle-et-le-Perrenot (FR); Pourchet, Jérémy, 25650 Gilley (FR); Guiet, Lionel, 70100 Gray (FR)
(74) Representative: Magin, Ludwig Bernhard

(56) References cited:
- EP-A- 1 310 154
- WO-A-00/16607
- WO-A-98/44776
- US-A1- 2002 124 529

## Description

This invention relates to a wrapping machine with a wrapping table rotating an object to be wrapped in one plane, a wrapping arm or the wrapping table itself rotating in a plane preferably perpendicular to the first plane, a film holder to hold a film end, a film dispense assembly on the wrapping arm and a film deflector between the film holder and the object.

Film wrapping machines are used to enclose products, like bales of silage, hay, cotton etc. or also industrial products, with stretched film in an air tight manner. Some well known principles, see ELHO Sideliner (Print remark ELHO 020 Forsberg 01.2001) or BUSATIS BM 1701 (Print remark 1/93 1000 Wi) use a stationary table with rolls or belts, on which the bale is deposited and which then is rotated about a horizontal axis. One, two or three arms carrying a film roll each are rotated about a vertical axis to apply film on the surface of the bale rotated by the table. At the end of the wrapping cycle the film is cut by a knife or any separating element and the film end is secured. At the beginning of the next wrapping cycle the end of the film is kept by the knife until the arm(s) have(s) put some layers onto the bale and the film clinges on itself safely enough. During this part of the wrapping cycle the film is deflected by rolls extending along the radial line of the bale to keep the film under tension, even when the first layers move towards the knife, which otherwise would reduce the tension in the film, which then may fall off the bale. Finally the knife releases the film end. Said deflecting effect is shown in the ELHO and BUSATIS brochures. Wrappers operating according to another principle have stationary arms, but a rotatable table.

The problem this invention is based on is seen in the fact, that the film may leave the roll and fall off the bale, get loose, etc.

This problem is solved in an innovative way by means of the teaching of claim 1, whereas advantageous features further developing the invention are given in the claims related to claim 1.

By means of this teaching the film is hindered by the retainer from slipping off the deflector or roll in the prior art device. Said deflector may be a disc as shown by the BUSATIS brochure, a roll holding the bale against axial movement as shown in the ELHO brochure, but also a simple and rigid bar, hook, structure member of the wrapping machine, a piece connected to the knife etc. The only purpose of the deflector is to keep the film run between the knife (holding the film end) and the film dispense assembly on the arm tight, while the bale rotates and the first layer moves towards and away from the retained film end, thereby varying the distance. The retainer may be of any form, like a hook, a depression in the deflector, etc. The retainer may have a fixed surface, but may also be or have a roll; it itself may be stationary but also moveable to follow somehow the bale movement.

If the deflector is a rotating shaft, drum, roll, sleeve, collar or disc, the axis of rotation of it may or may not follow the radial line of the rotating object and it may or may not be in contact with it, e.g. to limit its axial movement. The deflector may reach until about the axis of rotation of the object, provided that the wrapping arms still can apply the film to the bale during the relative rotating movement.

The retainer can be easily produced, if it is formed like a groove in the profile of the shaft or similar, an opening in the disc, a cover on top of the shaft, which protrudes above the circumference of the shaft cylinder, etc. Said cover or end piece forming the retainer may be connected to the deflector, but may also be connected to the end of an axle extending through a hollow shaft or similar.

If the retainer is formed as a fixed holder, like an upside-down J, it may be either welded or screwed to a frame and adjacent the knife or even on the moveable or non-moveable part of the knife; or it is fixed adjustably by set screws, clamps or the like.

If the retainer is and/or the deflector is/are moveable, in particular to follow the movement of the object, it/they may keep the tension in the film and the pulling direction constant such, that the film cannot slip off the circumference of the bale. Obviously this would be achieved best, if the fixed end area of the film is positioned in the area of the axis of rotation of the bale or other object.

Since the wrapping situation depends very much on the shape of the bale, of crop falling off the bale etc. it might still happen, that the first layer of the film slips off the object to be wrapped. Using a sensor which realizes whether the film is kept by or left the retainer will assure, that an operator is informed about this malfunction and may either manually repeat the wrapping process or the wrapping cycle is re-started automatically.

Heretoafter one embodiment of the invention is described in more detail and in relation to the drawing. It is shown in:
- fig. 1: a wrapping machine in 3-D depiction,
- fig. 2: a deflector of the wrapping machine of figure 1 with a retainer and
- fig. 3: the deflector and retainer during wrapping operation.

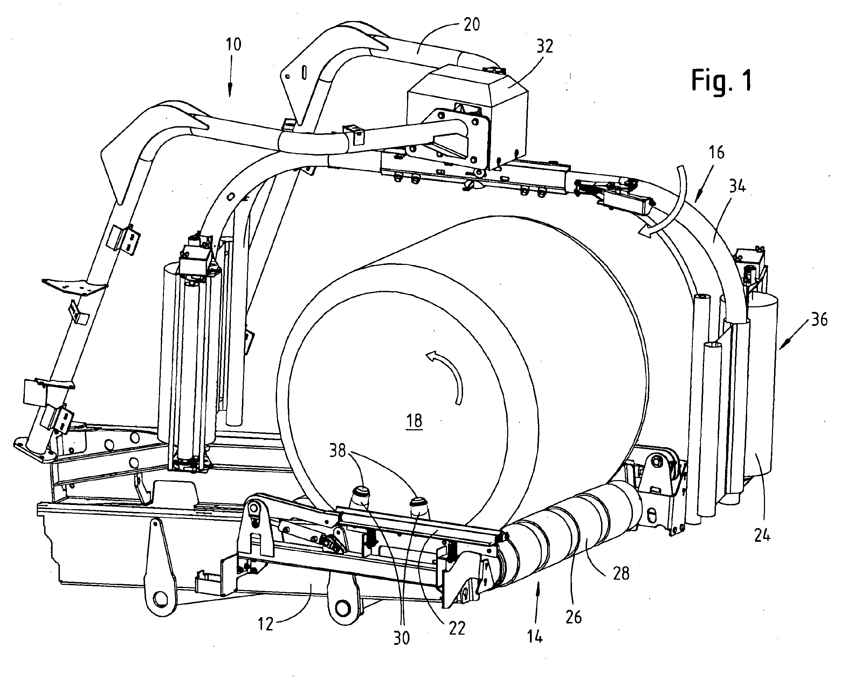

A wrapping machine 10 shown in figure 1 comprises a frame 12, a wrapping table 14, and wrapping arms 16 and carries an object 18.

The wrapping machine 10 may be hitched to the front or rear of a tractor, may be installed on a trailed chassis, but may also be connected to another machine, like a not shown baler.

The frame 12 forms at least the lower part of the wrapping machine 10 and carries all other components. In the shown embodiment the frame 12 also has a front subframe 20 which first extends upright from the frame 12 and in front of the wrapping table 14, and then rearwardly to end above the center area of the wrapping table 14, as this is widely known in the prior art and as it is shown in the ELHO brochure. On each side of the frame 12 a film holder 22 is provided, which usually comprises a knife, a serrated plate or the like and a counterbar, whereas either of them is moveable in order to either clamp the end area of a film 24 or to release it. Said film holder 22 is controlled hydraulically or electrically by a not shown motor.

The wrapping table 14 comprises two rolls 26 oriented in one direction, which usually is transverse to a forward movement direction of the wrapping machine 10, and which are remote from each other a distance which is smaller than the diameter of the object 18. At least one of these rolls 26 is driven clockwise when looking to figure 1. A set of endless belts 28 is trained over these rolls 26 and bridges the distance between them. The belts 28 and the rolls 26 are dimensioned such, that they can carry the object 18 and cause its rotation in a counterclockwise direction. At the left and the right hand side of the wrapping table 14 (only visible on the L.H.) deflectors 30 are provided, which in this case are formed as rolls of about 30 cm length and oriented along a radial line of the rotating object 18. The deflectors 30 are received rotatably on a hidden axle 42 and abut against the planar side surface of the object 18 during rotation to limit its axial movement. The deflectors 30 extend slightly above the film holder 22.

The wrapping arms 18 form a U attached upside down to the end portion of the subframe 20 above the wrapping table 14 and are rotationally driven by a motor 32; seen from the top the wrapping arms 18 rotate in clockwise direction during wrapping. The wrapping arms 18 have depending, upright legs 34 to each of which a film dispense assembly 36 is attached. Such dispense assemblies 36 are well known and contain a roll with film, a pre-stretcher, a contact sensor, etc. The location of these film dispense assemblies 36 is such, that they can rotate on an orbit about the center area of the rotating object 18. The film 24 is of the self-adhesive type or is provided with a glue, such that overlapping layers stick on each other. When the film 24 is applied to the object 18 it is stretched to assure, that it presses against the object 18 as good as possible to avoid air capturing. The timing of the rotation of the object 18 and of the wrapping arms 16 is such, that the object 18 finally is covered by about four layers of film 24 to be air tight.

The object 18 is usually a bale made from harvested crop, like grass and hay, as this is shown. But the object 18 could also be a bale of cotton, of paper, industrial waste, etc. In general any subject could be wrapped with film 24.

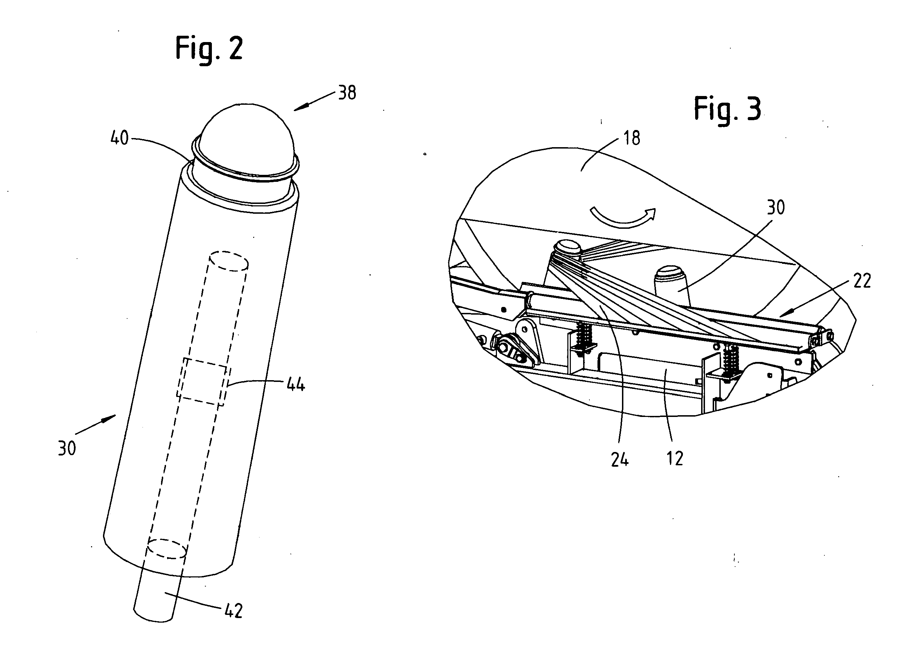

The left front deflector 30 - see figure 1 -, but others as well, like the rear right deflector 30, are provided with a retainer 38, which in this embodiment is formed by a groove 40 cut or otherwise formed into the circumference of the roll shaped deflector 30. The width and depth of the groove 40 is such that the retainer 38 created by it is capable of holding a film 24, which is compressed to become a string or rope, against slipping off the deflector 30. Figure 3 shows such a compressed film 24 caught in the groove 40, which stays there when the object 18 with the first layer(s) of film 24 rotates past it.

As to be seen in figure 2 a sensor 44 is located inside the deflector 30 to measure the relative movement between the deflector 30 and the axle 42, be it rotation or bend forces.

All in all, the following is a description of the function of the wrapping machine 10, which starts from a status as it is shown in figure 1, in which an object 18 is ready to get wrapped and in which an end of the film 24 is retained in the film holder 22. It is seen in figure 1, that in this situation the deflectors 30 are located between the film 24 and the object 18. In order to wrap the object 18 the object 18 is rotated by the wrapping table 14 in counterclockwise direction when looking to figure 1. Afterwards the wrapping arms 16 are rotated in clockwise direction, when viewed from the top. Since the end of each film 24 is captured by the film holder 22 the rotating wrapping arms 16 pull film 24 over the circumferential surface of the object 18 on a circular path, whereas due to the slowly rotating object 18 the layers on the object will run slightly slanted. It becomes apparent from looking onto figure 1 that the layer on the front side of the object 18 will move downwards with and due to its rotation. Due to this downward movement the tension in the film 24 will decrease, since the distance to the film holder 22, where the film end is captured, gets smaller. When the object 18 moved the film 24 sofar downward, that it passes the front deflector 30 on the left hand side, it will wind around it as to be seen in figure 3. When the film 24 comes up again at the rear and reaches the height of groove 40 forming the retainer 38 the film 24 will be stopped by retainer 38 from sliding axially and finally leaving the deflector 30. Now, when the film 24 on the up- and rearwardly rotating object 18 moves away from the film holder 22 again, the film 24 will stay at the retainer 38 and the tension will increase again to assure an airtight application to the object 18, rather than slipping off the deflector 30. In case the film 24 would nevertheless slip of the deflector 30, the sensor 44 would recognize this and give a signal to an operator.

## Claims

1. Wrapping machine (10)_{.}with a wrapping table (14) rotating an object (18) to be wrapped in one plane, a wrapping arm (16) or the wrapping table (14) itself rotating in a plane preferably perpendicular to the first plane, a film holder (22) to hold a film end, a film dispense assembly (36) on the wrapping arm (16) and a film deflector (30) between the film holder (22) and the object (18), **characterized by** a retainer (38) on or close to the film deflector (30).

2. Wrapping machine according to claim 1, **characterized in that** the film deflector (30) is formed as a rotating shaft, roll or disc.

3. Wrapping machine according to claim 2, **characterized in that** the retainer (38) is formed by a groove (40) in the profile of the deflector (30), by a cover at the end of the deflector (30) or similar.

4. Wrapping machine according to claim 1, **characterized in that** the retainer (38) is formed as a fixed holder.

5. Wrapping machine according to one or more of the preceding claims, **characterized in that** the retainer (38) and/or the deflector (30) is moveable, in particular to follow the movement of the object (18).

6. Wrapping machine according to one or more of the preceding claims, **characterized by** a sensor (44) which realizes whether the film (24) is kept by or has left the retainer (38).

## Patentansprüche

1. Umwickelmaschine (10) mit einem Umwickeltisch (14), der einen zu umwickelnden Gegenstand (18) in einer Ebene dreht, wobei sich ein Umwickelarm (16) oder der Umwickeltisch (14) selbst in einer vorzugsweise senkrecht zur ersten Ebene verlaufenden Ebene dreht, einem Folienhalter (22) zum Halten eines Folienendes, einer Folienausgabeanordnung (36) am Umwickelarm (16) und einem Folienablenker (30) zwischen dem Folienhalter (22) und dem Gegenstand (18), **gekennzeichnet durch** einen Rückhalter (38) am oder nahe am Folienablenker (30).

2. Umwickelmaschine nach Anspruch 1, **dadurch gekennzeichnet, dass** der Folienablenker (30) als ein Drehschaft, eine Drehrolle oder eine Drehscheibe ausgebildet ist.

3. Umwickelmaschine nach Anspruch 2, **dadurch gekennzeichnet, dass** der Rückhalter (38) durch eine Nut (40) im Profil des Ablenkers (30), durch eine Abdeckung am Ende des Ablenkers (30) oder Ähnliches gebildet ist.

4. Umwickelmaschine nach Anspruch 1, **dadurch gekennzeichnet, dass** der Rückhalter (38) als ein feststehender Halter ausgebildet ist.

5. Umwickelmaschine nach einem oder mehreren der vorhergehenden Ansprüche, **dadurch gekennzeichnet, dass** der Rückhalter (38) und/oder der Ablenker (30) beweglich ist, insbesondere um der Bewegung des Gegenstands (18) zu folgen.

6. Umwickelmaschine nach einem oder mehreren der vorhergehenden Ansprüche, **gekennzeichnet durch** einen Sensor (44), der erfasst, ob die Folie (24) vom Rückhalter (38) gehalten wird oder diesen verlassen hat.

## Revendications

1. Machine d'emballage (10) comprenant une table d'emballage (14) faisant tourner un objet (18) à emballer dans un plan, un bras d'emballage (16), ou la table d'emballage (14) elle-même tournant dans un plan de préférence perpendiculaire au premier plan, un support de film (22) pour retenir une extrémité d'un film, un ensemble de distribution de film (36) sur le bras d'emballage (16) et un déflecteur de film (30) entre le support de film (22) et l'objet (18), **caractérisée par** un dispositif de retenue (38) sur le déflecteur de film (30) ou proche de celui-ci.

2. Machine d'emballage selon la revendication 1, **caractérisée en ce que** le déflecteur de film (30) est formé en tant qu'arbre, rouleau ou disque rotatif.

3. Machine d'emballage selon la revendication 2, **caractérisée en ce que** le dispositif de retenue (38) est formé par une gorge (40) dans le profilé du déflecteur (30), par un couvercle à l'extrémité du déflecteur (30), ou similaire.

4. Machine d'emballage selon la revendication 1, **caractérisée en ce que** le dispositif de retenue (38) est formé en tant que support fixe.

5. Machine d'emballage selon l'une quelconque ou plusieurs des revendications précédentes, **caractérisée en ce que** le dispositif de retenue (38) et/ou le déflecteur (30) sont déplaçables, en particulier de manière à suivre le mouvement de l'objet (18).

6. Machine d'emballage selon l'une quelconque ou plusieurs des revendications précédentes, **caractérisée par** un capteur (44) qui détermine si le film (24) est retenu par le dispositif de retenue (38) ou a quitté ce dernier.
